# EUROPEAN PATENT SPECIFICATION

(11) **EP 3 344 587 B1**
(45) Date of publication and mention of the grant of the patent: **07.07.2021**
(21) Application number: 15902699.6
(22) Date of filing: 30.09.2015
(51) Int. Cl.: C02F 3/12, C02F 3/30, C02F 3/20

(54) **METHOD AND SYSTEM FOR WASTEWATER TREATMENT USING MEMBRANE BIOREACTOR**
VERFAHREN UND VORRICHTUNG ZUR ABWASSERBEHANDLUNG MIT EINEM MEMBRANBIOREAKTOR
PROCÉDÉ ET SYSTÈME DE TRAITEMENT DES EAUX USÉES UTILISANT UN BIORÉACTEUR MEMBRANAIRE

(30) Priority: 01.09.2015 CN 201510556544
(43) Date of publication of application: 11.07.2018
(73) Proprietor: Jiangxi JDL Environmental Protection Co., Ltd., Nanchang, Jiangxi 330100 (CN)
(72) Inventor: LIAO, Zhimin, Nanchang Jiangxi 330100 (CN); ZHOU, Tao, Nanchang Jiangxi 330100 (CN)
(74) Representative: Lang, Christian
(86) International application number: PCT/CN2015/091153
(87) International publication number: WO 2017/035892

(56) References cited:
- EP-A1- 2 251 307
- EP-A1- 2 251 307
- CN-A- 101 885 537
- CN-A- 102 730 914
- CN-U- 205 061 691
- US-A1- 2010 288 697
- US-A1- 2010 288 697
- US-A1- 2010 288 698
- US-B1- 6 616 843
- LIAO ET AL: "A new process of aerobic membrane bioreactor for treatment of biogas slurry", JIANGXI LIGONG DAXUE XUEBAO - JOURNAL OF JIANGXI UNIVERSITY OF SCIENCE AND TECHNOLOGY, JIANGXI LIGONG DAXUE, CN, vol. 34, no. 3, 30 June 2013 (2013-06-30), XP009504770, ISSN: 2095-3046
- LIAO, ZHIMIN ET AL.: 'A new process of aerobic membrane bioreactor for treatment of biogas slurry' JOURNAL OF JIANGXI UNIVERSITY OF SCIENCE AND TECHNOLOGY vol. 34, no. 3, 30 June 2013, XP009504770

## Description

### TECHNICAL FIELD

The invention relates to the field of wastewater treatment, and more particularly to a method and a system for wastewater treatment using a membrane bioreactor.

### BACKGROUND OF THE INVENTION

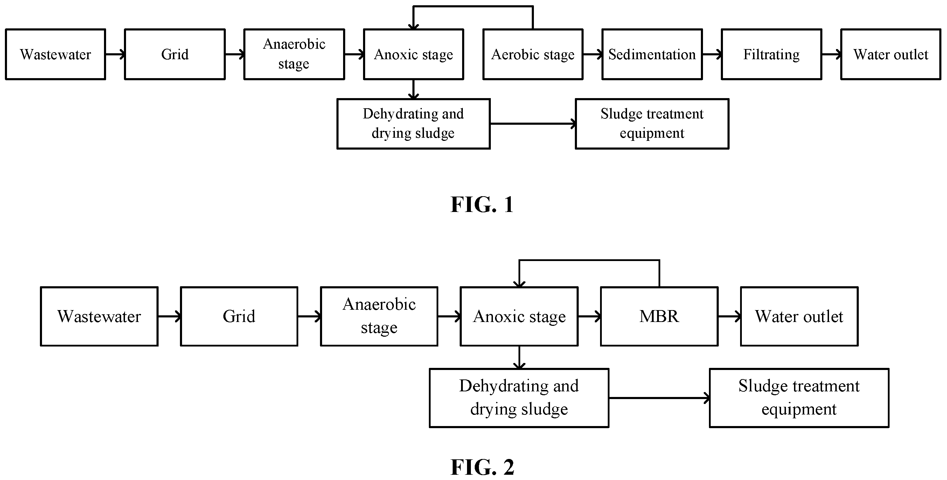

As shown in FIG 1, conventional biochemical methods for wastewater treatment require various dissolved oxygen environments including anaerobic environment, aerobic environment, and facultative anaerobic/anoxic environment. The pollutants are degraded according to the following equations:

C₁₀H₁₉O₃N + CO₂+SO₄ → R-COOH +CH₄+NH₃+H₂S+ H₂O (producing odor at anaerobic stage)

C₁₀H₁₉O₃N + NO³⁻→ CO₂+N₂ +H₂O (anoxic stage)

C₁₀H₁₉O₃N + O₂ → CO₂+NO3- +H₂O (aerobic stage)

NH₃ + O₂ → NO³⁻ +H₂O (aerobic stage)

The molecular formula C₁₀H₁₉O₃N represents an organic compound, and it can be understood that the organic compound can have other molecular structures.

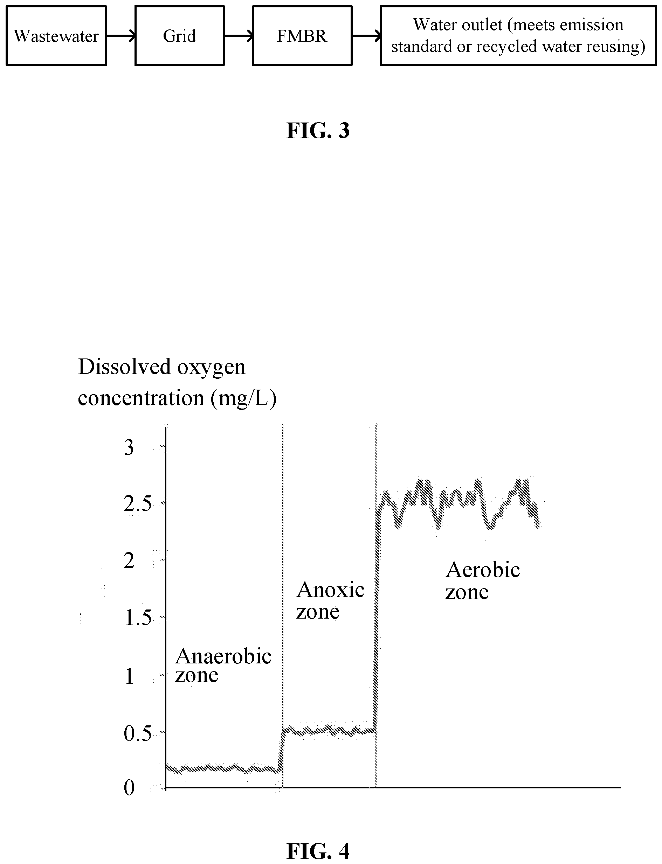

For conventional wastewater treatment methods with or without membrane bioreactor (MBR), areas of different dissolved oxygen environments are disposed in one reaction system, as shown in FIGS. 2 and 4. That is to say, solid structures must be constructed to provide different dissolved oxygen environments for the degradation of pollutants. As a result, the wastewater treatment system has complex structure, multiple control points, high energy consumption, difficult maintenance and unstable operation.

US6616843, EP2251307, US2010/288697, CN10188537 and US2010/0288698 disclose aerated submerged membrane bioreactor systems.

### SUMMARY OF THE INVENTION

In view of the above-described problems, it is one objective of the invention to provide a method and a system for wastewater treatment using a membrane bioreactor.

To achieve the above objective, the invention provides a wastewater treatment system comprising a membrane bioreactor as described in claim 1 and a corresponding method of wastewater treatment using a membrane bioreactor as described in claim 2.

The degradation process of phosphorus in the pollutants is as follows:

Organisms + Phosphate + Facultative organisms → Microbial cells (organophosphorus) Microbial cells (organophosphorus) + Facultative organisms → P₂H₄/PH₃

The degradation process of nitrogen in the pollutants is as follows:

1/2NH₄⁺ (ammonia nitrogen) + 1/2H₂O + 1/4O₂ + facultative organisms → 1/2NO₂⁻+ 2e + 3H⁺

1/2NH₄⁺ (ammonia nitrogen) + 1/2NO₂⁻ + facultative organisms →1/2N₂ +H₂O

As nitrogen concentration in inlet water changes, a nitrogen degradation process in the reaction system is accompanied by short-cut nitrification and denitrification and the like reactions.

In accordance with the invention, there is provided a system for wastewater treatment using a membrane bioreactor, comprising: a reaction vessel, the membrane separation system, a water production system, and an aeration system. The membrane separation system is disposed in the reaction vessel. The water production system communicates with the membrane separation system for pumping a filtrate out of the membrane separation system. The aeration system is employed to aerate the reaction vessel and the membrane separation system. The aeration system is adapted to enable a dissolved oxygen concentration in the reaction vessel to be larger than 0 and smaller than 1.5 mg/L, so that the reaction vessel is maintained at a facultative-organism -adapted environment. A dissolved oxygen concentration in the membrane separation system is larger than 0 and smaller than 1.5 mg/L, and the reaction vessel excluding the membrane separation system is larger than 0 and smaller than 0.5 mg/L, and the dissolved oxygen concentration in the membrane separation system is higher than the dissolved oxygen concentration in the reaction vessel excluding the membrane separation system.

The membrane separation system employs a microfiltration membrane or an ultrafiltration membrane.

The aeration system employs microporous aeration, perforated aeration, or a combination thereof.

The membrane separation system is flushed by concentrating an aeration rate at the membrane separation system by the aeration system.

When the aeration system is a perforated aeration system, the membrane separation system is concentratedly aerated by increasing an amount of holes or bore size of a perforated aeration pipe corresponding to the membrane separation system.

When the aeration system is a microporous aeration system, the membrane separation system is concentratedly aerated by increasing an amount of microporous aeration disks corresponding to the membrane separation system.

Compared with existing technologies, advantages of the method and system of wastewater treatment using the membrane bioreactor without physical area division are as follows: the reaction vessel is maintained at a facultative-organism-adapted environment, which is easy to control and consume less dissolved oxygen. The dissolved oxygen concentration in the membrane separation system is higher for the convenience of scouring.

### BRIEF DESCRIPTION OF THE DRAWINGS

FIG **1** is a flow chart of a conventional biochemical method of wastewater treatment;
FIG **2** is a flow chart of a conventional wastewater treatment method using a membrane bioreactor;
FIG **3** is a flow chart of a wastewater treatment method of the invention;
FIG **4** is dissolved oxygen concentrations of a conventional biochemical method of wastewater treatment;
FIG **5** is a dissolved oxygen concentration of a wastewater treatment method of the invention;
FIG **6** is a schematic diagram of a perforated aeration pipe of a wastewater treatment system comprising a membrane bioreactor in accordance with one exemplary embodiment of the invention;
FIG **7** is a schematic diagram of a microporous aeration structure of a wastewater treatment system comprising a membrane bioreactor in accordance with one exemplary embodiment of the invention;
FIG **8** is a schematic diagram of a wastewater treatment system comprising a membrane bioreactor in example 1;
FIG **9** is a schematic diagram of a wastewater treatment system comprising a membrane bioreactor in example 2; and
FIG **10** is a schematic diagram of a wastewater treatment system comprising a membrane bioreactor in example 3.

### DETAILED DESCRIPTION OF THE EMBODIMENTS

For further illustrating the invention, experiments detailing a method and a system for wastewater treatment using a membrane bioreactor are described below. It should be noted that the following examples are intended to describe and not to limit the invention.

The method of wastewater treatment using a membrane bioreactor comprising a reaction vessel and an aeration system is provided. The method comprises controlling the aeration rate of the aeration system to enable a dissolved oxygen concentration in a reaction vessel to be larger than 0 and smaller than 1.5 mg/L, so that the reaction vessel is maintained at a facultative-organism-adapted environment. Preferably, the dissolved oxygen concentration is below 1.5 mg/L in the membrane separation system, and concentrations are below 0.5 mg/L in other areas. The dissolved oxygen concentration in the membrane separation system is higher than those of other areas so as to guarantee scour intensity, and the concentration difference has no influence on the facultative environment of the reaction system. The wastewater treatment system by the membrane reactor without the area division employs a facultative membrane reactor (FMBR). A flow chart of the method of wastewater treatment by the membrane reactor without physical area division is shown as FIG **3****.**

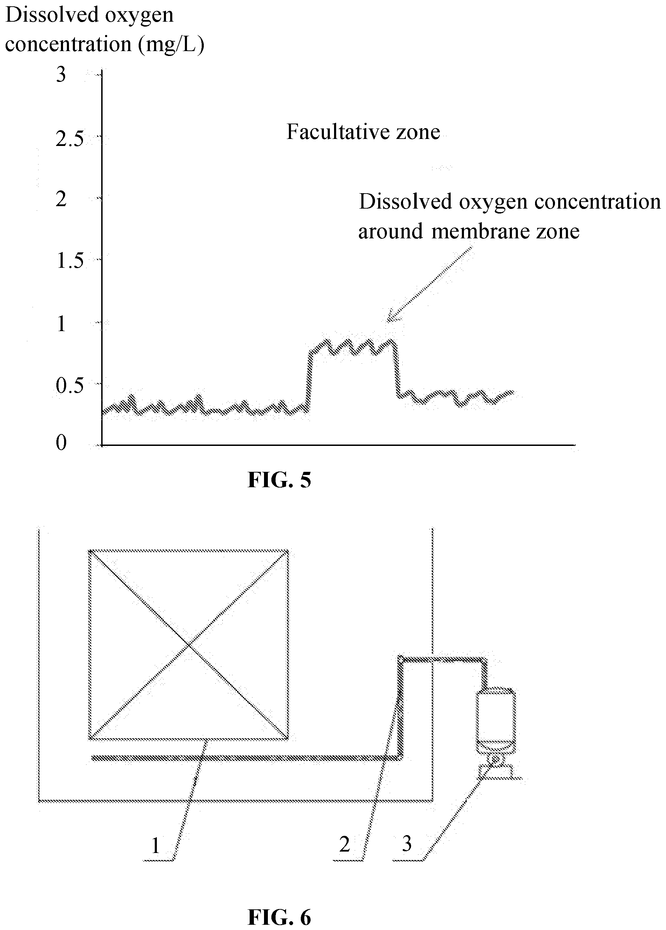

A dissolved oxygen concentration of a method of wastewater treatment by the membrane bioreactor without physical area division is shown as FIG 5. Under a facultative environment, characteristic organisms comprise aerobic organisms, anaerobic organisms, and mostly facultative organisms, and the organisms coexist in one reaction zone. Macromolecule pollutants are degraded into micromolecule and are further gasified. Phosphorus in the pollutant is not discharged in the sludge, but is gasified and discharged in the form of phosphine or biphosphine. Nitrogen in the pollutant is not only degraded via nitrification and denitrification or short-cut nitrification and denitrification, but also is gasified and degraded via anaerobic ammonium oxidation bacteria. Dead organisms (organic residual sludge) can be utilized as the nutrient source of the living organisms and are not discharged form the reactor, thereby realizing zero discharge of organic residual sludge during the whole reaction process.

The pollutant degradation process of the method of wastewater treatment by the membrane bioreactor without physical area division is shown as follows:

Organisms + Phosphate + Facultative organisms → Microbial cells (organophosphorus)

Microbial cells (organophosphorus) + Facultative organisms → P₂H₄/PH₃

1/2NH₄⁺ (Ammonia nitrogen) + 1/2H₂O + 1/4O₂ + Facultative organisms → 1/2NO₂⁻ + 2e + 3H⁺

1/2NH₄⁺ (Ammonia nitrogen) + 1/2NO₂⁻ + Facultative organisms →1/2N₂ +H₂O

### Example 1

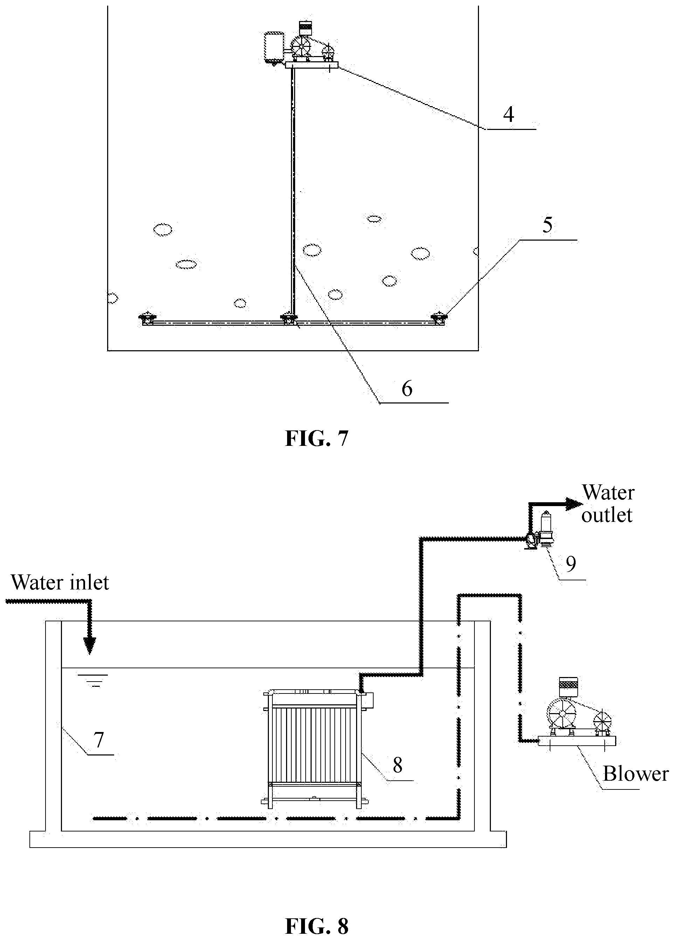

As shown in FIG **8**, a wastewater treatment system comprising a membrane bioreactor employed an integrated wastewater processor using membrane technology, comprising a reaction vessel **7**, a membrane separation system, a water production system, and an aeration system. Areas in the reaction vessel **7** are not divided via separators. The membrane separation system adopted an ultrafiltration membrane assembly **8.** The water production system pumped water via a water production pump **9.** A blower and an aeration pipe were adopted to aerate in the aeration system. Domestic wastewater passed through the reaction vessel **7,** and the blower **3** or **4** controlled aeration to offer oxygen. As shown in FIG **6****,** a perforated aeration pipe **2** was employed to aerate beneath the ultrafiltration membrane assembly **1**, and microporous aeration disks **5** and aeration pipes **6** and were employed to aerate at other areas as shown in FIG **7**, thereby forming a facultative reaction zone in the processor. A dissolved oxygen concentration at the membrane was controlled at 0.8-1.2 mg/L, and the dissolved oxygen concentration at other regions was controlled at 0.5-1 mg/L. The pollutants were degraded and removed via a high-efficiency degradation of high-concentration characteristic organism, and finally the pollutants were filtrated via the ultrafiltration membrane assembly disposed on the reaction zone, thereby realizing zero discharge of organic residual sludge during the whole reaction process.

### Example 2

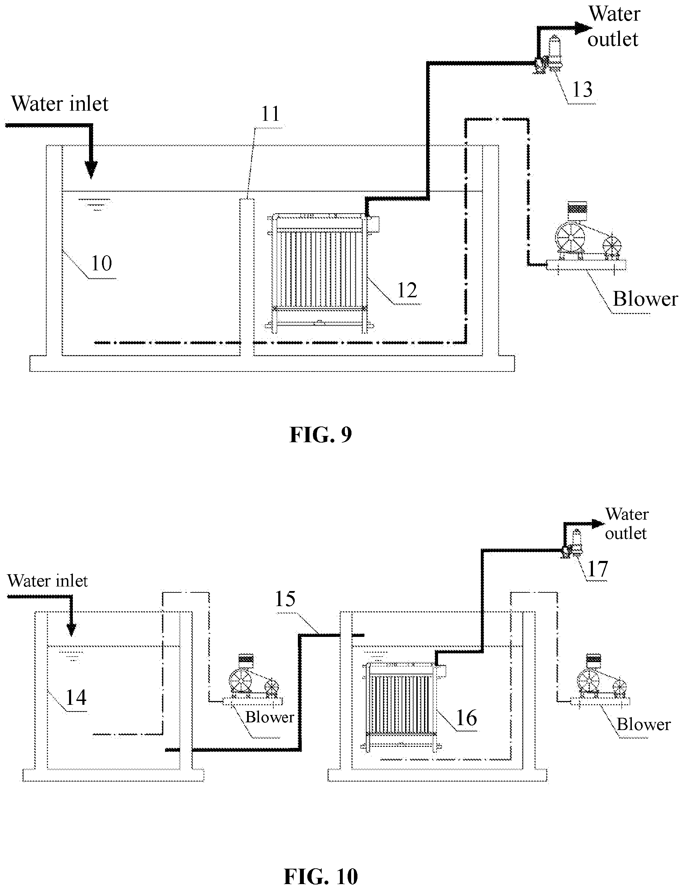

As shown in FIG **9**, a wastewater treatment system comprising a membrane bioreactor employed an integrated wastewater processor using membrane technology, comprises a reaction vessel **10**, a membrane separation system, a water production system, and an aeration system. Areas in the reaction vessel **10** were divided into two, three, or more reaction zones via separators **11.** The membrane separation system adopted an ultrafiltration membrane assembly **12.** The water production system pumped water via a water production pump **13.** A blower and an aeration pipe were adopted to aerate in the aeration system. Domestic wastewater passed through the processor, and the blower offered oxygen for the integrated reaction zone, or each reaction zone was aerated by a plurality of blowers with a similar aeration rate. As shown in FIG **6**, a perforated aeration system was employed to aerate, and the holes of a perforated pipe per unit area beneath the membrane assembly were more than those of other areas, thereby forming a facultative reaction zone in the processor. A dissolved oxygen concentration at the membrane was controlled at 0.9-1.4 mg/L, and the dissolved oxygen concentration at other regions was controlled at 0.2-0.5 mg/L. The pollutants were degraded and removed via a high-efficiency degradation of high-concentration characteristic organism, and finally the pollutants were filtrated via the ultrafiltration membrane assembly disposed on the reaction zone, thereby realizing zero discharge of organic residual sludge during the whole reaction process.

### Example 3

As shown in FIG **10**, a wastewater treatment system comprising a membrane bioreactor employed an integrated wastewater processor using membrane technology, comprising a reaction vessel, a membrane separation system, a water production system, and an aeration system. The reaction vessel employed a civil pool construction, comprising a reaction pool **14** which was a water inlet and a reaction pool **15** which was a water outlet, and the two pools were connected via a pipe. The membrane separation system employed an ultrafiltration membrane assembly **16**, and the ultrafiltration membrane assembly **16** was disposed on the reaction pool **15** alone. The water production system pumped water via a water production pump **17.** A blower and an aeration pipe were adopted to aerate in the aeration system. Domestic wastewater passed through the reaction system, and the blower offered oxygen for the two reaction pools, or each reaction pool was aerated by two blowers with a similar aeration. As shown in FIG **7**, a microporous aeration structure was employed to aerate, and microporous aeration disks beneath the membrane assembly were more than those of other areas, thereby forming a facultative reaction zone in the processor. A dissolved oxygen concentration at the reaction pool with the membrane assembly was controlled at 0.9-1.3 mg/L, and the dissolved oxygen concentration at other areas is controlled at 0.2-0.5 mg/L. The pollutants were degraded and removed via a high-efficiency degradation of high-concentration characteristic organism, and finally the pollutants were filtrated via the ultrafiltration membrane assembly disposed on the reaction zone, thereby realizing zero discharge of organic residual sludge during the whole reaction process.

## Claims

1. A wastewater treatment system comprising a membrane bioreactor, the membrane bioreactor comprising:
a) a reaction vessel (7, 10);
b) a membrane separation system (1, 8, 12, 16);
c) a water production system (9, 13, 17); and
d) an aeration system (2, 3, 4, 5, 6);
wherein:
the membrane separation system is disposed in the reaction vessel;
the water production system communicates with the membrane separation system to pump filtrate out of the membrane separation system;
the aeration system is employed to aerate the reaction vessel and the membrane separation system;
the aeration system is adapted to enable a dissolved oxygen concentration in the reaction vessel to be larger than 0 and smaller than 1.5 mg/L, so that the reaction vessel is maintained at a facultative-organism-adapted environment;
a dissolved oxygen concentration in the membrane separation system is larger than 0 and smaller than 1.5 mg/L, a dissolved oxygen concentration in the reaction vessel excluding the membrane separation system is larger than 0 and smaller than 0.5 mg/L, and the dissolved oxygen concentration in the membrane separation system is higher than the dissolved oxygen concentration in the reaction vessel excluding the membrane separation system;
the membrane separation system employs a microfiltration membrane or an ultrafiltration membrane, and the aeration system employs microporous aeration, perforated aeration, or a combination thereof;
the membrane separation system is flushed by concentrating an aeration rate at the membrane separation system by the aeration system;
when the aeration system is a perforated aeration system, the amount of holes per unit area or the bore size of a perforated aeration pipe of the perforated aeration system is larger beneath the membrane separation system than in the reaction vessel excluding the membrane separation system, so as to increase the aeration below the membrane separation system; and
when the aeration system is a microporous aeration system, the amount of microporous aeration disks per unit area of the microporous aeration system is larger beneath the membrane separation system than in the reaction vessel excluding the membrane separation system, so as to increase the aeration below the membrane separation system.

2. A method of wastewater treatment using a membrane bioreactor, the membrane bioreactor comprising:
a) a reaction vessel (7, 10);
b) a membrane separation system (1, 8, 12, 16);
c) a water production system (9, 13, 17); and
d) an aeration system (2, 3, 4, 5, 6);
wherein:
the membrane separation system is disposed in the reaction vessel;
the water production system communicates with the membrane separation system to pump filtrate out of the membrane separation system;
the aeration system is employed to aerate the reaction vessel and the membrane separation system;
the aeration system is adapted to enable a dissolved oxygen concentration in the reaction vessel to be larger than 0 and smaller than 1.5 mg/L, so that the reaction vessel is maintained at a facultative-organism-adapted environment;
a dissolved oxygen concentration in the membrane separation system is larger than 0 and smaller than 1.5 mg/L, a dissolved oxygen concentration in the reaction vessel excluding the membrane separation system is larger than 0 and smaller than 0.5 mg/L, and the dissolved oxygen concentration in the membrane separation system is higher than the dissolved oxygen concentration in the reaction vessel excluding the membrane separation system;
the membrane separation system employs a microfiltration membrane or an ultrafiltration membrane, and the aeration system employs microporous aeration, perforated aeration, or a combination thereof;
the membrane separation system is flushed by concentrating an aeration rate at the membrane separation system by the aeration system;
when the aeration system is a perforated aeration system, the amount of holes per unit area or the bore size of a perforated aeration pipe of the perforated aeration system is larger beneath the membrane separation system than in the reaction vessel excluding the membrane separation system, so as to increase the aeration below the membrane separation system; and
when the aeration system is a microporous aeration system, the amount of microporous aeration disks per unit area of the microporous aeration system is larger beneath the membrane separation system than in the reaction vessel excluding the membrane separation system, so as to increase the aeration below the membrane separation system;
the method comprising:
controlling an aeration rate of the aeration system to enable the dissolved oxygen concentration in the reaction vessel to be larger than 0 and smaller than 1.5 mg/L, so that the reaction vessel is maintained at a facultative-organism-adapted environment; and
controlling the aeration rate of the aeration system so that the dissolved oxygen concentration in the membrane separation system is larger than 0 and smaller than 1.5 mg/L, the dissolved oxygen concentration in the reaction vessel excluding the membrane separation system is larger than 0 and smaller than 0.5 mg/L, and the dissolved oxygen concentration in the membrane separation system is higher than the dissolved oxygen concentration in the reaction vessel excluding the membrane separation system.

## Patentansprüche

1. Abwasserbehandlungssystem, umfassend einen Membranbioreaktor, der Folgendes umfasst:
a) ein Reaktionsgefäß (7, 10);
b) ein Membrantrennungssystem (1, 8, 12, 16);
c) ein Wasserproduktionssystem (9, 13, 17) und
d) ein Belüftungssystem (2, 3, 4, 5, 6);
wobei:
das Membrantrennungssystem in dem Reaktionsgefäß angeordnet ist;
das Wasserproduktionssystem mit dem Membrantrennungssystem in Verbindung steht, um Filtrat aus dem Membrantrennungssystem herauszupumpen;
das Belüftungssystem eingesetzt wird, um das Reaktionsgefäß und das Membrantrennungssystem zu belüften;
das Belüftungssystem angepasst ist, um eine gelöste Sauerstoffkonzentration im Reaktionsgefäß zu befähigen, größer als 0 und kleiner als 1,5 mg/L zu sein, sodass das Reaktionsgefäß bei einer einem fakultativen Organismus angepassten Umgebung gehalten wird;
eine gelöste Sauerstoffkonzentration im Membrantrennungssystem größer als 0 und kleiner als 1,5 mg/L ist, eine gelöste Sauerstoffkonzentration im Reaktionsgefäß ausschließlich des Membrantrennungssystems größer als 0 und kleiner als 0,5 mg/L ist und die gelöste Sauerstoffkonzentration im Membrantrennungssystem höher als die aufgelöste Sauerstoffkonzentration im Reaktionsgefäß ausschließlich des Membrantrennungssystems ist;
das Membrantrennungssystem eine Mikrofiltrationsmembran oder eine Ultrafiltrationsmembran verwendet, und das Belüftungssystem mikroporöse Belüftung, perforierte Belüftung oder eine Kombination davon verwendet;
das Membrantrennungssystem durch Konzentrieren einer Belüftungsrate am Membrantrennungssystem durch das Belüftungssystem durchspült wird;
wenn das Belüftungssystem ein perforiertes Belüftungssystem ist, die Anzahl von Löchern pro Einheitsfläche oder die Bohrungsgröße eines perforierten Belüftungsrohrs des perforierten Belüftungssystems größer unter dem Membrantrennungssystem ist als im Reaktionsgefäß ausschließlich des Membrantrennungssystems, um die Belüftung unter dem Trennungssystem zu verstärken; und
wenn das Belüftungssystem ein mikroporöses Belüftungssystem ist, die Anzahl der mikroporösen Belüftungsscheiben pro Einheitsfläche des mikroporösen Belüftungssystems größer unter dem Membrantrennungssystem ist als im Reaktionsgefäß ausschließlich des Membrantrennungssystems, um die Belüftung unter dem Membrantrennungssystem zu verstärken;

2. Verfahren zur Abwasserbehandlung, das einen Membranbioreaktor verwendet, der Folgendes umfasst:
a) ein Reaktionsgefäß (7, 10);
b) ein Membrantrennungssytem (1, 8, 12, 16);
c) ein Wasserproduktionssystem (9, 13, 17) und
d) ein Belüftungssystem (2, 3, 4, 5, 6);
wobei:
das Membrantrennungssystem im Reaktionsgefäß angeordnet ist;
das Wasserproduktionssystem in Verbindung mit dem Membrantrennungssystem steht, um Filtrat aus dem Membrantrennungssystem herauszupumpen;
das Belüftungssytem eingesetzt wird, um das Reaktionsgefäß und das Membrantrennungssystem zu belüften;
das Belüftungssystem angepasst ist, um eine gelöste Sauerstoffkonzentration im Reaktionsgefäß zu befähigen, größer als 0 und kleiner als 1,5 mg/L zu sein, sodass das Reaktionsgefäß bei einer einem fakultativen Organismus angepassten Umgebung gehalten wird;
eine gelöste Sauerstoffkonzentration im Membrantrennungssystem größer als 0 und kleiner als 1,5 mg/L ist, eine gelöste Sauerstoffkonzentration im Reaktionsgefäß ausschließlich des Membrantrennungssystems größer als 0 und kleiner als 0,5 mg/L ist, und die gelöste Sauerstoffkonzentration im Membrantrennungssystem höher als die gelöste Sauerstoffkonzentration im Reaktionsgefäß ausschließlich des Membrantrennungssystems ist;
das Membrantrennngssystem eine Mikrofiltrationsmembran oder eine Ultrafiltrationsmembran verwendet, und das Belüftungssystem mikroporöse Belüftung, perforierte Belüftung oder eine Kombination davon verwendet;
das Membrantrennungssystem durch Konzentrieren einer Belüftungsrate am Membrantrennungssystem durch das Belüftungssystem durchspült wird;
wenn das Belüftungssystem ein perforiertes Belüftungssystem ist, die Anzahl von Löchern pro Einheitsfläche oder die Bohrungsgröße eines perforierten Belüftungsrohrs des perforierten Belüftungssystems größer unter dem Membrantrennungssystem ist als im Reaktionsgefäß ausschließlich des Membrantrennungssystems, um die Belüftung unter dem Membrantrennungssystem zu verstärken; und
wenn das Belüftungssystem ein mikroporöses Belüftungssystem ist, die Anzahl der mikroporösen Belüftungsscheiben pro Einheitsfläche des mikroporösen Belüftungssystems größer unter dem Membrantrennungssystem ist als im Reaktionsgefäß ausschließlich des Membrantrennungssystems, um die Belüftung unter dem Membrantrennungssystem zu verstärken;
das Verfahren umfassend:
Regeln einer Belüftungsrate des Belüftungssystems, um die gelöste Sauerstoffkonzentration im Reaktionsgefäß zu befähigen, größer als 0 und kleiner als 1,5 mg/L zu sein, sodass das Reaktionsgefäß bei einer einem fakultativen Organismus angepassten Umgebung gehalten wird; und
Regeln der Belüftungsrate des Belüftungssystems, sodass die gelöste Sauerstoffkonzentration im Membrantrennungssystem größer als 0 und kleiner als 1,5 mg/L ist, die gelöste Sauerstoffkonzentration im Reaktionsgefäß ausschließlich des Membrantrennungssystem größer als 0 und kleiner als 0,5 mg/L ist, und die gelöste Sauerstoffkonzentration im Membrantrennungssystem höher als die gelöste Sauerstoffkonzentration im Reaktionsgefäß ausschließlich des Membrantrennungssystems ist.

## Revendications

1. Système de traitement d'eaux usées comprenant un bioréacteur à membrane, le bioréacteur à membrane comprenant :
a) une cuve de réaction (7, 10) ;
b) un système de séparation à membrane (1, 8, 12, 16) ;
c) un système de production d'eau (9, 13, 17) ; et
d) un système d'aération (2, 3, 4, 5, 6) ;
dans lequel :
le système de séparation à membrane est disposé dans la cuve de réaction ;
le système de production d'eau communique avec le système de séparation à membrane pour pomper du filtrat hors du système de séparation à membrane ;
le système d'aération est utilisé pour aérer la cuve de réaction et le système de séparation à membrane ;
le système d'aération est adapté pour permettre une concentration en oxygène dissout supérieure à 0 et inférieure à 1,5 mg/L dans la cuve de réaction, de sorte que la cuve de réaction conserve un environnement adapté aux organismes facultatifs ;
une concentration en oxygène dissout dans le système de séparation à membrane est supérieure à 0 et inférieure à 1,5 mg/L, une concentration en oxygène dissout dans la cuve de réaction hors système de séparation à membrane est supérieure à 0 et inférieure à 0,5 mg/L, et la concentration en oxygène dissout dans le système de séparation à membrane est supérieure à la concentration en oxygène dissout dans la cuve de réaction hors système de séparation à membrane ;
le système de séparation à membrane utilise une membrane de microfiltration ou une membrane d'ultrafiltration, et le système d'aération utilise une aération microporeuse, une aération perforée, ou une combinaison de celles-ci ;
le système de séparation à membrane est purgé en concentrant un débit d'aération au niveau du système de séparation à membrane par le système d'aération ;
lorsque le système d'aération est un système d'aération perforé, le nombre de trous par unité de surface ou l'alésage d'un tuyau d'aération perforé du système d'aération perforé est plus grand sous le système de séparation à membrane que dans la cuve de réaction hors système de séparation à membrane, de manière à augmenter l'aération en dessous du système de séparation à membrane ; et
lorsque le système d'aération est un système d'aération microporeux, le nombre de disques d'aération microporeux par unité de surface du système d'aération microporeux est plus grand sous le système de séparation à membrane que dans la cuve de réaction hors système de séparation à membrane, de manière à augmenter l'aération en dessous du système de séparation à membrane.

2. Procédé de traitement d'eaux usées employant un bioréacteur à membrane, le bioréacteur à membrane comprenant :
a) une cuve de réaction (7, 10) ;
b) un système de séparation à membrane (1, 8, 12, 16) ;
c) un système de production d'eau (9, 13, 17) ; et
d) un système d'aération (2, 3, 4, 5, 6) ;
dans lequel :
le système de séparation à membrane est disposé dans la cuve de réaction ;
le système de production d'eau communique avec le système de séparation à membrane pour pomper du filtrat hors du système de séparation à membrane ;
le système d'aération est utilisé pour aérer la cuve de réaction et le système de séparation à membrane ;
le système d'aération est adapté pour permettre une concentration en oxygène dissout supérieure à 0 et inférieure à 1,5 mg/L dans la cuve de réaction, de sorte que la cuve de réaction conserve un environnement adapté aux organismes facultatifs ;
une concentration en oxygène dissout dans le système de séparation à membrane est supérieure à 0 et inférieure à 1,5 mg/L, une concentration en oxygène dissout dans la cuve de réaction hors système de séparation à membrane est supérieure à 0 et inférieure à 0,5 mg/L, et la concentration en oxygène dissout dans le système de séparation à membrane est supérieure à la concentration en oxygène dissout dans la cuve de réaction hors système de séparation à membrane ;
le système de séparation à membrane utilise une membrane de microfiltration ou une membrane d'ultrafiltration, et le système d'aération utilise une aération microporeuse, une aération perforée, ou une combinaison de celles-ci ;
le système de séparation à membrane est purgé en concentrant un débit d'aération au niveau du système de séparation à membrane par le système d'aération ;
lorsque le système d'aération est un système d'aération perforé, le nombre de trous par unité de surface ou l'alésage d'un tuyau d'aération perforé du système d'aération perforé est plus grand sous le système de séparation à membrane que dans la cuve de réaction hors système de séparation à membrane, de manière à augmenter l'aération en dessous du système de séparation à membrane ; et
lorsque le système d'aération est un système d'aération microporeux, le nombre de disques d'aération microporeux par unité de surface du système d'aération microporeux est plus grand sous le système de séparation à membrane que dans la cuve de réaction hors système de séparation à membrane, de manière à augmenter l'aération en dessous du système de séparation à membrane ;
le procédé comprenant :
la commande d'un débit d'aération du système d'aération pour obtenir une concentration en oxygène dissout supérieure à 0 et inférieure à 1,5 dans la cuve de réaction, de manière à ce que la cuve de réaction conserve un environnement adapté aux organismes facultatifs ; et
la commande du débit d'aération du système d'aération pour obtenir une concentration en oxygène dissout supérieure à 0 et inférieure à 1,5 mg/L dans le système de séparation à membrane, une concentration en oxygène dissout supérieure à 0 et inférieure à 0,5 mg/L dans la cuve de réaction hors système de séparation à membrane, et la concentration en oxygène dissout dans le système de séparation à membrane est supérieure à la concentration en oxygène dissout hors système de séparation à membrane.
